(19) Europäisches Patentamt / European Patent Office / Office européen des brevets

(11) **EP 4 711 798 A1**

(12) **DEMANDE DE BREVET EUROPEEN**

(43) Date de publication:
**18.03.2026 Bulletin 2026/12**

(21) Numéro de dépôt: **25202195.1**

(22) Date de dépôt: **15.09.2025**

(51) Classification Internationale des Brevets (IPC):
**G01S 5/02** $^{(2010.01)}$    **G01S 13/76** $^{(2006.01)}$

(52) Classification Coopérative des Brevets (CPC):
**G01S 5/0273; G01S 5/0284; G01S 13/0209;**
G01S 5/0294; G01S 2205/03

(84) Etats contractants désignés:
**AL AT BE BG CH CY CZ DE DK EE ES FI FR GB
GR HR HU IE IS IT LI LT LU LV MC ME MK MT NL
NO PL PT RO RS SE SI SK SM TR**
Etats d'extension désignés:
**BA**
Etats de validation désignés:
**GE KH LA MA MD TN**

(30) Priorité: **17.09.2024 FR 2409887**

(71) Demandeur: **Commissariat à l'Energie Atomique
et aux Energies
Alternatives
75015 Paris (FR)**

(72) Inventeur: **VILLIEN, Christophe
38054 GRENOBLE CEDEX 09 (FR)**

(74) Mandataire: **Atout PI Laplace
Immeuble Up On
25 Boulevard Romain Rolland
CS 40072
75685 Paris Cedex 14 (FR)**

(54) **PROCEDE D AMELIORATION DE LA PRECISION DE LA POSITION D'UN PORTEUR MOBILE**

(57) L'invention se rapporte à un procédé d'amélioration de la précision de la position d'un porteur mobile, comprenant des étapes de :

S1) prédiction d'une position du porteur mobile (1), et détermination d'un ensemble de distances prédites ( $\left\{\widehat{d_{k,J}^{rad}}\right\}_{j=1:N_{obs}}$ ) entre le porteur mobile (1) et un ensemble d'obstacles (2, 3, $O^j$) dans l'environnement du porteur mobile (1) ;

S2) acquisition d'une réponse impulsionnelle de canal (CIR) entre un premier nœud (T1) et un deuxième nœud (T0), au moins un des deux nœuds (T1, T0) étant embarqué sur le porteur mobile (1) ;

S3) détermination d'un ensemble de composantes multi-trajets ( $\left\{d_{k,i}^{rad}\right\}_{i=1:N_{MPC}}$ ) à partir de la réponse impulsionnelle de canal (CIR) ;

S4) association d'au moins une distance prédite ( $\left\{\widehat{d_{k,J}^{rad}}\right\}_{j=1:N_{obs}}$ ) à au moins une composante multi-trajet ( $\left\{d_{k,i}^{rad}\right\}_{i=1:N_{MPC}}$ ) correspondante de façon à obtenir un ensemble de distances mises à jour ( $\left\{d_{k,i}^{rad}\right\}, O^j$ ) entre le porteur mobile (1) et l'ensemble d'obstacles (2, 3, $O^j$).

[Fig. 1]

## Description

## Domaine technique

L'invention se situe dans le domaine des télécommunications, et en particulier dans le domaine de la localisation d'un porteur mobile par Ultra Large Bande (ULB ou UWB pour Ultra Wide Band). L'invention trouve son application pour de la localisation dans des zones qui n'offrent pas un service de positionnement par satellites suffisamment précis, ou dans des zones non couvertes par un service de localisation par satellites.

En l'absence d'un service de GNSS (positionnement par satellites) fiable, la technologie UWB offre une très bonne précision, généralement autour de 10 cm, en raison de sa très large bande passante, dépassant généralement 500 MHz.

La radio UWB a pour caractéristique d'occuper un spectre de fréquences très large, c'est à dire une bande d'au moins 20% de la fréquence centrale de fonctionnement ou être supérieure à 250MHz (EU) ou 500MHz (US).

L'utilisation d'un spectre très large (les radios conventionnelles utilisent généralement des largeurs de bandes allant de quelques kilohertz jusqu'à une dizaine de mégahertz) confère à cette technologie la capacité de mesurer très finement les temps d'arrivée du signal radio (ou TOA en anglais pour Time of Arrival), ou les différences de temps d'arrivée (TDOA pour « Time Difference of Arrival »), ce qui permet par la suite de calculer un temps de vol et donc une distance très précise.

En effet, la largeur de bande importante du signal dans le domaine spectral se traduit par la capacité d'émettre des impulsions très courtes dans le domaine temporel, chacune d'elles ayant une durée de l'ordre de quelques nanosecondes. Puisque la précision de la mesure du temps d'arrivée est en rapport avec la durée des impulsions, les distances peuvent être mesurées avec des précisions de l'ordre de la dizaine de centimètres.

Dans de tels cas, un ou plusieurs récepteurs UWB (également appelés « tags »), placés sur le porteur mobile à localiser (par exemple un terminal portatif, un drone, ou tout type de véhicule) mesurent le temps d'arrivée ou la différence de temps d'arrivée avec des ancres UWB de positions connues, afin de calculer les distances entre les ancres et les récepteurs UWB, et ainsi déterminer la position du porteur.

Ainsi, dans la présente demande, les ancres UWB sont des nœuds de télécommunications stationnaires installés à un emplacement fixe connu dans un système de localisation, qui émettent (et peuvent aussi recevoir) des signaux UWB. Les tags UWB (également appelées balises dans le domaine technique considéré) sont des nœuds de télécommunications portés par les objets à suivre qui reçoivent les signaux émis par les ancres UWB à des moments différents en fonction de leur distance par rapport aux ancres UWB (et qui peuvent aussi en émettre). En mesurant le temps de vol des signaux, les balises UWB peuvent déterminer leur distance par rapport aux ancres UWB. En combinant les distances calculées, la position exacte du porteur mobile peut être déterminée par trilatération.

Idéalement, les ancres sont déployées autour de la zone cible (i.e. la zone dans lequel se trouve le porteur à localiser), afin de garantir bonne dilution géométrique de précision. Cependant, pour des applications telles que la localisation d'un drone dans un entrepôt, les ancres sont montées au niveau du sol, tandis que le drone peut voler à haute altitude, ou encore la zone de déploiement des ancres est limitée à une petite superficie. Ainsi, la dilution géométrique de précision peut être grande, ce qui peut nuire à la précision de la localisation du porteur.

Certaines applications utilisant la technologie UWB incluent des systèmes radar UWB qui sont bien adaptés pour un usage embarqué dans un drone afin de détecter les obstacles et d'estimer la hauteur du drone, comme décrit dans l'article de [Barra]. Avec ces systèmes, le radar UWB et la localisation sont basés sur deux dispositifs différents.

Certains auteurs (notamment [Gentner], [Bocus], [Ledergerber], [Li] ou encore [Santoro]) ont démontré la faisabilité des mesures radar bistatiques en utilisant des dispositifs de localisation UWB du type DW1000 ou DW3000 de la société Qorvo. Ces dispositifs permettent de mesurer la réponse impulsionnelle de canal (ou CIR pour Channel Impulse Response) collectée lors d'une transmission télémétrique entre deux appareils pour détecter les échos et utiliser le chemin direct à des fins de synchronisation.

Cependant, dans l'état de l'art, l'utilisation « détournée » de la CIR d'un circuit UWB dédié à la mesure de distance n'est décrite qu'entre deux radios statiques par rapport à leur environnement. La principale raison est qu'il est très complexe d'identifier une cible à partir d'une CIR car celle-ci n'offre pas une grande résolution (typiquement, une CIR comprend 1000 mesures échantillonnées à 1 ns, mais les trois-quarts de ces mesures ne contiennent que le bruit qui précède l'arrivée des signaux) et que le bruit de fond peut être important (en particulier lorsque les émissions/réceptions - mesures radars - sont effectuées à partir d'un objet lui-même en mouvement). En effet, la fonctionnalité première de ranging requiert des antennes plutôt omnidirectionnelles, c'est-à-dire qu'elles reçoivent potentiellement des échos provenant de toutes les directions de l'espace, ce qui augmente considérablement ce bruit de fond, tandis que la fonctionnalité radar s'en prémunit en utilisant des antennes directives.

Par conséquent, le traitement de ce bruit de fond selon les techniques connues s'effectue en enregistrant « une réponse de base » de celui-ci, et la détection d'une cible mobile s'effectue par analyse des variations de la mesure par rapport à cette « réponse de base ». Cette approche ne fonctionne donc que si le bruit de fond - et donc les antennes radars - sont statiques.

Il existe donc un besoin pour fournir un procédé d'amélioration de la précision de la position d'un porteur mobile, utilisant des mesures de CIR avec des antennes mobiles par rapport à leur environnement.

**Résumé de l'invention**

Un objet de l'invention est donc un procédé d'amélioration de la précision de la position d'un porteur mobile, comprenant des étapes de :

S1) prédiction d'une position du porteur mobile, et détermination d'un ensemble de distances prédites entre le porteur mobile et un ensemble d'obstacles dans l'environnement du porteur mobile ;
S2) acquisition d'une réponse impulsionnelle de canal entre un premier nœud et un deuxième nœud, au moins un des deux nœuds étant embarqué sur le porteur mobile ;
S3) détermination d'un ensemble de composantes multi-trajets à partir de la réponse impulsionnelle de canal ;
S4) association d'au moins une distance prédite à au moins une composante multi-trajet correspondante de façon à obtenir un ensemble de distances mises à jour entre le porteur mobile et l'ensemble d'obstacles.

Avantageusement, le procédé comprend, après l'étape S4), une étape S5) de mise à jour de la position du porteur mobile en fonction de l'ensemble de distances mise à jour.
Avantageusement, la détermination d'un ensemble de composantes multi-trajets comprend les sous-étapes de :

- détermination d'un premier temps de référence correspondant au trajet direct entre le premier nœud et le deuxième nœud ;
- détermination de n temps additionnels correspondant aux différents trajets indirects entre le premier nœud et le deuxième nœud ;
- calcul de n distances mesurées en fonction des n temps additionnels, du premier temps de référence et de la distance entre le premier nœud et le deuxième nœud.

Avantageusement, l'association d'une distance prédite à une composante multi-trajet comprend, pour chaque obstacle de l'ensemble d'obstacles, la comparaison par rapport à un seuil de la différence entre la distance prédite et chacune des distances mesurées.
Avantageusement, le seuil est déterminé de façon dynamique en fonction de la dispersion des distances prédites.
Avantageusement, l'association d'une distance prédite à une composante multi-trajet comprend, pour toutes les associations possibles entre l'ensemble de composantes multi-trajets et l'ensemble d'obstacles dans l'environnement du porteur mobile, les sous-étapes de :

- calcul d'une position du porteur mobile à partir des distances prédites et des distances mesurées, en utilisant ladite association ;
- à partir de cette position, calcul des distances théoriques entre le porteur mobile et une pluralité d'ancres fixes et d'obstacles ;
- calcul de résidus définis comme la différence entre les distances théoriques et les distances mesurées ;
- calcul un d'un score de vraisemblance en fonction des résidus ;
- détermination de l'association pour laquelle le score de vraisemblance est le plus élevé.

Avantageusement, la détermination d'un premier temps de référence comprend, dans une première fenêtre de recherche :

- une détermination d'un premier échantillon dont l'amplitude est supérieure à un premier seuil ;
- une détermination d'une amplitude maximale d'échantillon postérieur au premier échantillon ;
- une détermination d'un deuxième seuil qui est inférieur à l'amplitude maximale ;
- une détermination d'un deuxième échantillon dont l'amplitude précède immédiatement le deuxième seuil, et d'un troisième échantillon dont l'amplitude succède immédiatement au deuxième seuil ;
- le premier temps de référence étant déterminé par une interpolation linéaire effectuée entre le deuxième échantillon et le troisième échantillon.

Avantageusement, le premier seuil est un multiple du bruit ambiant mesuré dans la première fenêtre de recherche.
Avantageusement, le deuxième seuil est égal à la moitié de l'amplitude maximale.
Avantageusement, la détermination de n temps additionnels comprend, pour chaque temps additionnel compris entre 1 et n :

- une détermination de l'échantillon ayant l'amplitude maximale de la réponse impulsionnelle de canal ;
- une extraction du temps d'arrivée de la composante multi-trajets dans une fenêtre de recherche centrée sur l'échantillon ayant l'amplitude maximale de la réponse impulsionnelle de canal ;
- un forçage à zéro de tous les échantillons dans une fenêtre d'élimination centrée sur l'échantillon ayant l'amplitude maximale de la réponse impulsionnelle de canal.

Avantageusement, la prédiction d'une position du porteur mobile est implémentée par un filtre de Kalman étendu.

En variante, la prédiction d'une position du porteur mobile est implémentée par un filtrage particulaire.

L'invention se rapporte également à un système d'amélioration de la précision de la position d'un porteur mobile, le système étant configuré pour :

S1) prédire une position du porteur mobile, et détermination d'un ensemble de distances prédites entre le porteur mobile et un ensemble d'obstacles dans l'environnement du porteur mobile ;

S2) acquérir une réponse impulsionnelle de canal entre un premier nœud et un deuxième nœud, au moins un des deux nœuds étant embarqué sur le porteur mobile ;

S3) déterminer un ensemble de composantes multitrajets à partir de la réponse impulsionnelle de canal ;

S4) associer une distance prédite à une composante multi-trajet correspondante de façon à obtenir un ensemble de distances mises à jour comprenant au moins une distance mise à jour ;

Avantageusement, les deux nœuds sont embarqués sur le porteur mobile, le premier nœud étant un tag Ultra Large Bande, le deuxième nœud étant un récepteur Ultra Large Bande.

Avantageusement, le porteur mobile est un drone.

## Description des figures

D'autres caractéristiques, détails et avantages de l'invention ressortiront à la lecture de la description faite en référence aux dessins annexés donnés à titre d'exemple.

La figure 1 illustre une vue d'ensemble du système selon l'invention.

La figure 2 illustre une architecture permettant de mettre en œuvre le procédé selon l'invention.

La figure 3, la figure 4, la figure 5 et la figure 6 illustrent un exemple de détermination du premier temps de référence sur des graphes présentant la norme de la CIR en fonction du temps.

La figure 7 illustre les étapes de détermination des temps additionnels correspondant aux trajets indirects.

La figure 8 illustre un exemple d'association entre une distance prédite et une composante multi-trajet.

## Description détaillée

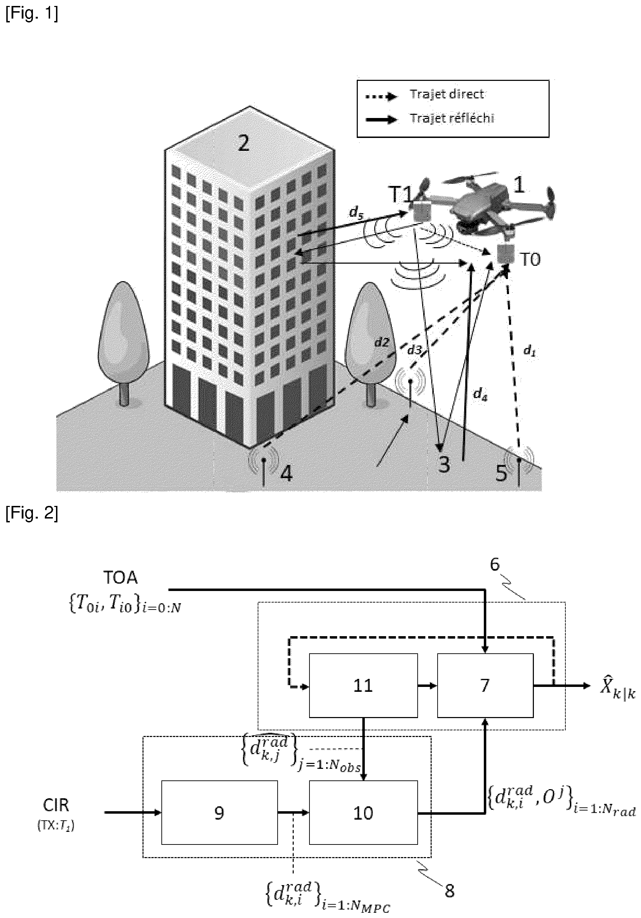

La figure 1 présente un exemple de configuration du système selon l'invention. Il comprend un réseau d'ancres (4, 5) dont les positions sont connues, et qui permettent d'effectuer la localisation UWB, grâce aux mesures de temps de vol entre les ancres (4, 5) et le porteur mobile 1. Au moins deux tags UWB (T0, T1) sont intégrées au porteur mobile 1. Elles permettent d'effectuer le positionnement du porteur mobile 1 en coopérant avec les ancres (4, 5). Sur la figure 1, seules deux balises UWB sont représentées, mais il est peut être envisagé d'équiper le porteur mobile 1 de plus de deux tags UWB, ce qui permet d'augmenter le nombre de plages mesurées et de fournir des informations sur l'attitude du porteur mobile 1, notamment dans le cas où le porteur mobile 1 est un drone.

Les émissions selon la technologie Ultra Large bande suivent un schéma d'accès multiple par répartition dans le temps, ou TDMA pour « Time Division Multiple Schéma d'accès » et sont organisés en trames f, où chaque nœud (c'est-à-dire les balises et les ancres) dispose d'un emplacement dédié pour sa transmission.

Un des nœuds (par exemple le nœud T0) peut servir de coordinateur pour indiquer le début d'une nouvelle trame *f* et synchroniser tous les nœuds du réseau. Chacun des autres nœuds *i* envoie ensuite un paquet dans la tranche temporelle qui lui est allouée, permettant aux autres nœuds *j* de mesurer le temps d'arrivée $T_{ij}^{f}$.

Le paquet contient également l'instant de départ $T_{ii}^{f-1}$ et le temps d'arrivée mesurés par le nœud *i* lors de la précédente trame *f* - 1, correspondant aux transmissions des nœuds $j$ $T_{ji}^{f-1}$. En fonction de la taille du paquet, un nombre limité de mesures peuvent tenir dans le paquet.

En référence à la figure 1, il est supposé que les paquets transmis par les ancres (4, 5) contiennent le temps d'arrivée mesuré par le nœud i pendant les transmissions du nœud coordinateur $T_{0i}^{f-1}$. Ainsi, un ensemble de mesures $\left\{T_{0i}^{f-1}, T_{00}^{f-1}, T_{ii}^{f-1}, T_{i0}^{f-1}\right\}$ est obtenu, ce qui permet de mesurer la distance par télémétrie bidirectionnelle (Two Way Ranging) par rapport à la balise T0, en s'affranchissant des problèmes de synchronisation entre les horloges des ancres et des tags.

Le procédé selon l'invention est décrit plus en détail à la figure 2. Un bloc de détermination de la position 6 permet de mettre en œuvre une première étape S1) qui consiste, à un instant *k*, à prédire la position $\hat{X}_{k|k}$ du porteur mobile 1, et à déterminer un ensemble de distances prédites $\left\{\widehat{d_{k,j}^{rad}}\right\}_{j=1:N_{obs}}$ entre le porteur mobile 1 et un ensemble d'obstacles (2, 3, $N_{obs}$) dans l'environnement du porteur mobile 1.

Les distances prédites sont obtenues par télémétrie bidirectionnelle entre une pluralité d'ancres UWB de positions connues et un récepteur UWB embarqué sur le porteur mobile 1.

Le bloc de détermination de la position 6 peut être un filtre de Kalman, un filtre de Kalman étendu, un estimateur Bayésien, un estimateur utilisant la méthode des moindres carrés ou le maximum de vraisemblance, ou tout estimateur capable de déterminer une position courante à partir d'une prédiction et d'une mise à jour.

Dans des applications telles que la navigation et le suivi de trajectoires, où les modèles de mesures sont souvent non linéaires (ce qui est le cas des mesures UWB), le filtre de Kalman étendu est capable de fournir des estimations de position et de vitesse plus précises.

En variante, le bloc de détermination de la position 6 peut être un filtre particulaire. Le filtre particulaire estime une loi de probabilité complète (et non pas une valeur, comme le ferait le filtre de Kalman) de la grandeur recherchée (par exemple une position). Le filtre particulaire permet d'estimer des lois de probabilité non limitées à des lois gaussiennes, et peut donc, en théorie, traiter des problèmes plus complexes. En pratique, la loi de probabilité est modélisée par une multitude (des centaines ou des milliers) de particules qui chacune représente une valeur possible associée à un poids. Le poids des particules est mis à jour à partir des observations effectuées (mesures).

Les mesures de temps d'arrivée $(T_{0i}, T_{i0})_{i=0:N}$ sont transmises au bloc de détermination de la position 6, et en particulier à un bloc de mise à jour d'état 7. Un bloc de prédiction d'état 11 détermine un ensemble de distances prédites $\left\{\widehat{d_{k,J}^{rad}}\right\}_{j=1:N_{obs}}$ entre le porteur mobile 1 et l'ensemble d'obstacles environnant.

Un bloc de traitement radar 8 est configuré pour exécuter une étape S2) de réception d'une réponse impulsionnelle de canal (CIR pour « Channel Impulse Response ») entre le premier nœud T1 et le deuxième nœud T0, au moins un des deux nœuds (avantageusement le deuxième nœud T0) étant embarqué sur le porteur mobile 1, et la distance entre le premier nœud et le deuxième nœud étant connue (i.e. fixe ou mesurée).

Le fait qu'un même nœud mettre en œuvre des fonctions de réception UWB et mesure de CIR permet de les intégrer sur une seule et même carte (« hardware » commun), ce qui permet d'économiser de la masse embarquée.

Selon un mode de réalisation avantageux, le premier nœud T1 et le deuxième nœud T0 sont des balises UWB embarquées sur le porteur mobile 1, qui peut être un drone. Dans ce cas, l'espacement entre les balises est connu, et fixe. En variante, un des deux nœuds est embarqué sur le porteur mobile 1, et l'autre nœud est positionné à un emplacement fixe, par exemple au sol, ou au niveau d'un bâtiment. Ce nœud peut également être co-localisé avec une des ancres (dans ce cas, la distance entre le premier nœud et le deuxième nœud est également connue par une mesure de type « two-way ranging », ou mesure de distance par temps de vol).

Le bloc de traitement radar 8 reçoit les mesures de CIR. Il est rappelé que la réponse impulsionnelle d'un canal est la sortie obtenue lorsqu'un canal est excité par une impulsion (un signal de Dirac). Etant donné qu'il peut être difficile de générer une véritable impulsion de Dirac, différentes méthodes, connues de l'homme du métier, peuvent être mises en œuvre afin de mesurer la CIR, par exemple en utilisant une séquence pseudo-aléatoire qui a des propriétés spectrales similaires à une impulsion de Dirac.

Les étapes S1 et S2 peuvent être exécutées de façon concomitante, sans, toutefois, que cela ne soit indispensable.

Un bloc d'extraction MPC 9 (« MultiPath Component » ou composante multi-trajet) est configuré pour extraire un nombre prédéfini de composantes multi-trajets $N_{MPC}$ à partir de la réponse impulsionnelle de canal. Les composantes multi-trajets sont constituées d'un ensemble de distances $\left\{d_{k,i}^{rad}\right\}_{i=1:N_{MPC}}$, reflétant un trajet direct et des trajets indirects entre le premier nœud T1 et le deuxième nœud T0, à l'instant $k$.

Un bloc de sélection MPC 10 est configuré pour associer les échos détectés par le bloc d'extraction MPC 9 aux obstacles dont la position est connue (pour au moins une partie des obstacles déterminés par le bloc de détermination de la position 6. Pour cela, le bloc de sélection MPC 10 établit des correspondances entre les distances prédites $\left\{\widehat{d_{k,J}^{rad}}\right\}_{j=1:N_{obs}}$ et les composantes multi-trajet $\left\{d_{k,i}^{rad}\right\}_{i=1:N_{MPC}}$ de façon à obtenir un ensemble de distances mises à jour $\left\{d_{k,i}^{rad}, O^j\right\}_{i=1:N_{rad}}$ entre le porteur mobile 1 et l'ensemble d'obstacles (2, 3).

Il est considéré que les obstacles $\{O^j\}_{i=1:N_{obs}}$ sont limités à des surfaces planes et polygonales, les obstacles étant habituellement modélisés par des ensembles de petites surfaces planes. L'ensemble des obstacles comprend notamment le sol. Les sorties du bloc de traitement radar 8 sont constituées d'un maximum de $N_{rad}$ distances radar associées aux obstacles correspondants, avec $N_{rad} < \min(N_{obs}, N_{MPC})$.

Ainsi, le procédé selon l'invention permet d'améliorer la précision des distances entre le porteur mobile et les obstacles situés dans son environnement plus ou moins proche. En effet, à l'issue de l'étape d'association, la distance exploitée est la distance issue de la CIR, à priori plus précise que la distance prédite. Dans un exemple applicatif tel que la navigation d'un drone dans les rayonnages d'un entrepôt logistique, l'invention permet de contrôler finement et précisément la distance entre le drone et les parois du bâtiment ou les rayonnages, en particulier dans le plan horizontal. En effet, dans les solutions existantes, il a été constaté une dégradation de la précision de la localisation dans le plan horizontal, avec les risques que cela peut induire (dégradation causée par l'altitude du drone par rapport aux ancres).

Cette amélioration de la position est rendue possible grâce à la fonction radar mise en œuvre entre le premier nœud et le deuxième nœud. Les mesures de ranging et les mesures radar (mesure de la CIR) sont effectuées en utilisant le même équipement UWB, sans ajout s'équipement spécifique sur le porteur mobile.

Ainsi, la détermination d'un ensemble de composantes multi-trajets (mesures radar) sont obtenues en « détournant » la radio UWB de sa fonctionnalité première, ce qui est réalisé en exploitant une donnée interne (la CIR) disponible dans les puces UWB.

Le procédé peut également comprendre, de façon optionnelle, une étape de mise à jour de la position du porteur mobile, en fonction des distances mises à jour. Le calcul de la position mise à jour est effectué par triangulation, d'une façon connue de l'homme du métier.

La position $\hat{X}_{k|k}$ est mise à jour selon les équations connues du filtre de Kalman étendu.

Afin de décrire en détail ces différentes sous-étapes de la détermination d'un ensemble de composantes multi-trajets, il convient de définir, au préalable, le signal y(t) reçu lors d'une transmission entre le premier nœud T1 et le deuxième nœud T0, qui peut être modélisé par la relation suivante :

$$y(t) = \sum_{i=1}^{N_{MPC}} \alpha_i(t)s(t - \tau_i) + \vartheta(t)$$

$N_{MPC}$ correspond au nombre de composantes multi-trajets, $\alpha_i$ et $\tau_i$ représentent l'amplitude complexe et le délai de propagation de la $i^{ème}$ composante multi-trajets, $s(t)$ est un signal unitaire reçu tenant compte du signal émis et de la fonction de transfert de l'antenne, et $\vartheta(t)$ est un bruit blanc Gaussien aléatoire.

La réception du signal y(t) peut être mise en œuvre par le deuxième nœud T0 ; en variante, les deux nœuds T1 et T0 peuvent aussi être reliés à une unité de traitement commune qui reçoit l'ensemble des mesures effectuées par les nœuds T1 et T0.

Une première sous-étape SS1 de la détermination d'un ensemble de composantes multi-trajets consiste à déterminer un premier temps de référence $\tau_0$ correspondant au délai de propagation sur le trajet direct entre le premier nœud et le deuxième nœud. Le premier temps de référence $\tau_0$ peut être fourni par l'émetteur/récepteur UWB intégré dans les nœuds UWB.

Une deuxième sous-étape SS2 consiste à déterminer n temps additionnels $\tau_i$ correspondant aux délais de propagation sur les différents trajets indirects entre le premier nœud et le deuxième nœud.

Une troisième sous-étape SS3 consiste à calculer n distances mesurées en fonction des n temps additionnels $\tau_i$, du premier temps de référence $\tau_0$ et de la distance entre le premier nœud et le deuxième nœud.

Pour cela, chacune des n distances $d_i$ est calculée par la formule suivante :

$$d_i = \frac{1}{2}\sqrt{\left((\tau_i - \tau_0)c\right)^2 - d_0^2}$$

$d_0$ correspond à la distance entre le premier nœud T1 et le deuxième nœud T0, et $c$ correspond à la vitesse de la lumière.

L'émetteur/récepteur UWB (ou « UWB transceiver ») intégré dans un des nœuds numérise la CIR reçue dans une mémoire. Un algorithme de détection de pic est exécuté afin de calculer le premier temps de référence $\tau_0$. Il est particulièrement avantageux d'extraire les composantes multi-trajets (c'est-à-dire le temps de référence $\tau_0$ et les temps additionnels $\tau_i$) avec une précision meilleure que la période d'échantillonnage. Le fait d'avoir un sous-échantillonnage permet également d'améliorer la précision de la localisation du porteur mobile 1.

Plusieurs techniques peuvent être envisagées pour la détection de pic, notamment l'algorithme MUSIC (MUltiple SIgnal Classification) décrit dans l'article de [Jiokeng], ou l'algorithme de détection des pics les plus élevés décrit dans l'article de [Froehle]).

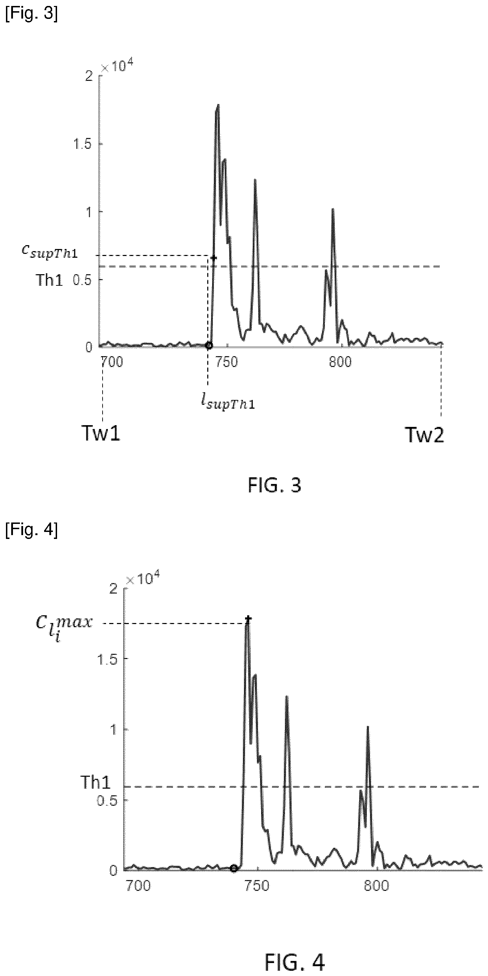

Les figures 3 à 6 illustrent les sous-étapes permettant de mettre en œuvre un mode de réalisation particulièrement avantageux pour déterminer un premier temps de référence $\tau_0$.

Une sous-étape préliminaire SS4 consiste à fixer une valeur pour le premier seuil Th1, et une fenêtre de recherche ([Tw1 Tw2]). La sous-étape préliminaire SS4 consiste donc en une étape de paramétrage, qui peut être exécutée en amont de la mission, par exemple sous forme d'un réglage effectué par l'utilisateur.

Avantageusement, le premier seuil Th1 est un multiple du bruit ambiant mesuré dans la première fenêtre de recherche [Tw1 Tw2]. Cela permet de calibrer le niveau du seuil par rapport au niveau de bruit qui peut être variable. En fixant le seuil ainsi (par exemple à trois fois le niveau de bruit), on a le seuil le plus bas possible (ce qui améliore la probabilité de détection) tout en minimisant la probabilité de fausse alarme (lorsque le bruit franchit le seuil).

Les figures 3 à 6 illustrent la norme $c_l$ de la CIR en fonction du temps, représenté par un indice temporel $l$. En effet, si on note $c_l = \|y(l.dt_c)\|$, avec $dt_c$ la résolution temporelle d'acquisition de la CIR par canal I/Q, la valeur, sur l'axe des abscisses, correspond à l'indice temporel $l$.

Sur les figures 3 à 6, on entend donc par « échantillon » l'indice temporel $l$ d'un point d'acquisition de la CIR, et par « amplitude » la valeur de la CIR $c_l$ correspondante.

Une première sous-étape SS5 consiste à déterminer un premier échantillon $l_{supTh1}$ dont l'amplitude $c_{supTh1}$ est supérieure au premier seuil Th1.

Une deuxième sous-étape SS6 consiste à déterminer une amplitude maximale $c_{l_i^{max}}$ d'échantillon postérieur au premier échantillon (cf. figure 4). La détermination d'amplitude maximale peut être effectuée en parcourant le signal jusqu'à ce qu'il devienne décroissant (i.e. la valeur suivante est inférieure à la valeur courante).

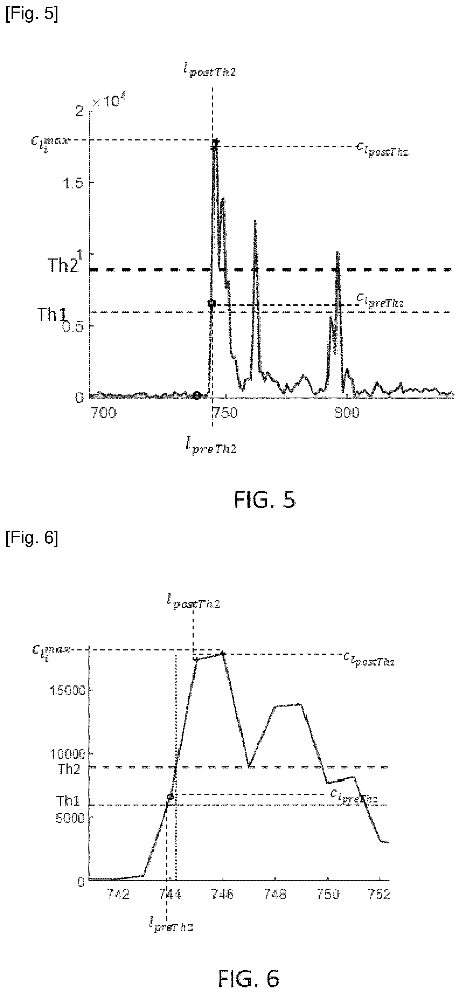

Une troisième sous-étape SS7 consiste à calculer un deuxième seuil Th2 qui est inférieur à l'amplitude maximale $c_{l_i}^{max}$ (cf. figure 5). Avantageusement, on peut fixer :

$$Th2 = c_{l_i}^{max}/2$$

Le choix d'un deuxième seuil Th2 à la moitié de l'amplitude maximale $c_{l_i}^{max}$ permet une détection dans la partie la plus « raide » du pic qui offre donc la meilleure précision.

Il est envisageable de déterminer autrement le deuxième seuil Th2, sous réserve qu'il soit inférieur à l'amplitude maximale $c_{l_i}^{max}$.

Une quatrième étape SS8 consiste à déterminer un deuxième échantillon $l_{preTh2}$ qui est le dernier échantillon avant le deuxième seuil Th2, c'est-à-dire $c_{l_{preTh2}}$ < *Th2*. En d'autres termes, l'amplitude de l'échantillon suivant $l_{preTh2}$ ($l_{preTh2}$ + 1) est supérieure ou égale à Th2.

La quatrième étape SS8 comprend également la détermination d'un troisième échantillon $l_{postTh2}$ (c'est-à-dire $l_{preTh2}$ + 1) qui est le premier échantillon après le deuxième seuil Th2, c'est-à-dire $c_{l_{postTh2}}$ > *Th2* (cf. figure 5). En d'autres termes, l'amplitude de l'échantillon précédent $l_{postTh2}$ ($l_{postTh2}$ - 1) est inférieure ou égale à Th2.

Rapporté à l'échelle temporelle (et non plus en nombre d'échantillons), il est possible d'écrire la relation suivante :

$$t_{l_{postTh2}} = t_{l_{preTh2}} + dt_c$$

La figure 6 illustre une vue en détail des échantillons 742 à 752 de la figure 5.

Dans une dernière sous-étape SS9, le premier temps de référence $\tau_0$ est déterminé par une interpolation linéaire effectuée entre le deuxième échantillon $l_{preTh2}$ et le troisième échantillon $l_{postTh2}$ :

$$\tau_0 = \frac{Th2 - c_{l_{preTh2}}}{c_{l_{postTh2}} - c_{l_{preTh2}}} dt_c + l_{preTh2} dt_c$$

Ainsi, l'algorithme décrit ci-dessus permet de déterminer le premier temps de référence $\tau_0$, qui correspond au trajet direct entre le premier nœud T1 et le deuxième nœud T0, avec une résolution temporelle qui est inférieure à celle des mesures UWB. Par ailleurs, l'algorithme décrit ci-dessus ne requiert pas d'accumulation de la CIR, ni d'utilisation d'un filtre anti repliement.

Il est rappelé que l'accumulation de la CIR consiste à agglomérer plusieurs CIR mesurées au même point, de façon à ce que les instants d'échantillonnage ne soient pas exactement les mêmes entre les CIR. Cela revient à augmenter le nombre d'échantillons de la CIR (à supposer que celle-ci reste constante).

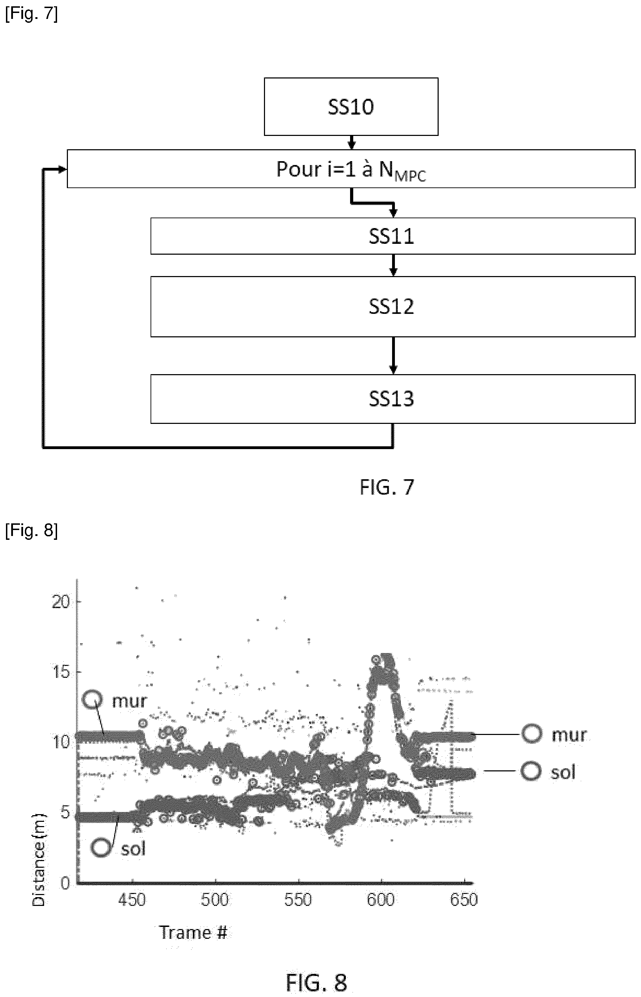

Le procédé selon l'invention détermine avantageusement n temps additionnels $\tau_{k,i}$ correspondant aux différents trajets indirects entre le premier nœud T1 et le deuxième nœud T0 (cf. figure 7 qui illustre les sous-étapes).

Pour cela, la fenêtre temporelle comprenant tous les échantillons utilisés dans la détermination du premier temps de référence $\tau_0$, c'est-à-dire les échantillons compris entre le deuxième échantillon $l_{preTh2}$ et l'échantillon $l_i^{max}$ ayant l'amplitude maximale $c_{l_i}^{max}$, est mise à zéro.

En variante, une fenêtre temporelle plus courte ou plus longue peut être mise à zéro et utilisée pour déterminer les temps additionnels $\tau_{k,i}$.

Une sous-étape préliminaire SS10 consiste à fixer le nombre n de composantes MPC à extraire, à fixer une largeur de fenêtre de recherche ([Tw1 Tw2]) et une largeur de fenêtre d'élimination ([Tw3 Tw4]). Le nombre n de composantes MPC à extraire peut être fixé, par exemple de façon expérimentale, en particulier en fonction du contexte topologique dans lequel le porteur mobile 1 va évoluer (entrepôt logistique, canyon urbain, etc.). La largeur de fenêtre de recherche ([Tw1 Tw2]) et la largeur de fenêtre d'élimination ([Tw3 Tw4]) peuvent être paramétrables.

Pour chacune des composantes MPC (i=1...$N_{MPC}$) à extraire, les sous-étapes suivantes sont exécutées.

Une première sous-étape SS11 consiste à déterminer l'échantillon $l_{i0}$ ayant l'amplitude maximale $c_{l_{i0}}$ sur toute la CIR.

Dans une deuxième sous-étape SS12, le temps d'arrivée de la $i^{ème}$ composante multi-trajets est déterminé sur la fenêtre de recherche [$l_{i0}$ . $dt_c$ - *Tw*1, $l_{i0}$ . $dt_c$ + *Tw*2], d'une façon identique à la détermination du premier temps de référence $\tau_0$ décrite précédemment.

Ainsi, on détermine un premier échantillon $l_{supTh1}$ dont l'amplitude $c_{supTh1}$ est supérieure au premier seuil Th1. Puis, on calcule un deuxième seuil Th2 qui est inférieur à l'amplitude maximale $c_{l_{i0}}$, de préférence *Th2* = $c_{l_{i0}}$/2. Un deuxième échantillon $l_{preTh2}$ qui est le dernier échantillon avant le deuxième seuil Th2, et un troisième échantillon $l_{postTh2}$ qui est le premier échantillon après le deuxième seuil Th2, sont déterminés. Enfin, l'interpolation linéaire décrite précédemment est effectuée entre le deuxième échantillon $l_{preTh2}$ et le troisième échantillon $l_{postTh2}$.

Ainsi, le temps d'arrivée de la $i^{ème}$ composante multi-trajets est déterminé par la formule suivante :

$$\tau_{k,i} = \frac{Th2 - c_{l_{preTh2}}}{c_{l_{postTh2}} - c_{l_{preTh2}}} dt_c + l_{preTh2} dt_c$$

Une dernière sous-étape SS13 consiste à mettre à zéro de tous les échantillons dans la fenêtre d'élimination $[l_{i0}. dt_c - Tw3, l_{i0}. dt_c + Tw4]$.

Le procédé est réitéré jusqu'à ce que les $N_{MPC}$ composantes multi-trajets aient été traitées.

Un ensemble de composantes multi-trajets, matérialisées par un ensemble de $N_{MPC}$ distances radar $\left\{ d_{k,i}^{rad} \right\}_{i=1:N_{MPC}}$, est ainsi obtenu à partir des temps d'arrivée $\tau_{k,i}$, selon la formule suivante :

$$d_{k,i} = \frac{1}{2} \sqrt{ \left( (\tau_{k,i} - \tau_0)c \right)^2 - d_0^2 }$$

c est la vitesse de la lumière, $d_0$ la distance entre le premier nœud T1 et le deuxième nœud T0, en supposant que $d_0 \ll c. \tau_{k,i}$.

L'algorithme de détermination des composantes multi-trajets est léger en termes de complexité de calcul, et en termes de volumes de données traitées, notamment en raison de la remise à zéro effectuée avant chaque itération du procédé pour chaque nouvelle composante multi-trajets. Ainsi, le procédé est facilement intégrable et apte à être embarqué dans un porteur mobile tel qu'un drone, dont les capacités d'emport sont limitées. Par ailleurs, la précision est améliorée par rapport aux solutions connues

Comme cela a été décrit précédemment, le bloc de sélection MCP 10 établit des correspondances entre les distances prédites $\left\{ \widehat{d_{k,J}^{rad}} \right\}_{j=1:N_{obs}}$ et les composantes multi-trajet $\left\{ d_{k,i}^{rad} \right\}_{i=1:N_{MPC}}$ de façon à obtenir un ensemble de distances mises à jour $\left\{ d_{k,i}^{rad}, O^j \right\}_{i=1:N_{rad}}$ entre le porteur mobile 1 et l'ensemble d'obstacles (2, 3).

Selon un mode de réalisation illustré par la figure 8, l'association d'une distance prédite $\left\{ \widehat{d_{k,J}^{rad}} \right\}_{j=1:N_{obs}}$ à une composante multi-trajet $\left\{ d_{k,i}^{rad} \right\}_{i=1:N_{MPC}}$ comprend, pour chaque obstacle de l'ensemble d'obstacles, la comparaison par rapport à un seuil de la différence entre la distance prédite et chacune des distances mesurées :

Ainsi, pour chaque obstacle connu $O^j$ (connaissance par prédiction) toutes les distances mesurées $d_{k,i}^{rad}$, correspondant à une composante multi-trajet, sont considérées comme étant associée à l'obstacle $O^j$ si la relation suivante est respectée :

$$\left| d_{k,i}^{rad} - \widehat{d_{k,J}^{rad}} \right| < K^{rad}$$

$K^{rad}$ étant une constante.

Sur la figure 8, les marques ayant une forme ronde correspondent aux distances prédites $\left\{ \widehat{d_{k,J}^{rad}} \right\}_{j=1:N_{obs}}$, et les marques sous forme de point correspondent aux distances des composantes multi-trajet $\left\{ d_{k,i}^{rad} \right\}_{i=1:N_{MPC}}$. Afin de déterminer les distances prédites $\left\{ \widehat{d_{k,J}^{rad}} \right\}_{j=1:N_{obs}}$, il est ainsi nécessaire de connaître la position des obstacles $O^j$. Pour une trame k, si un obstacle $O^j$ dont la position est connue se trouve dans la trame, la distance mesurée d'une $i^{ème}$ composante multi-trajet $d_{k,i}^{rad}$ est comparée à chacune des distances prédites $\widehat{d_{k,J}^{rad}}$. Il s'agit donc d'une analyse trame par trame.

Selon un mode de réalisation, le seuil est adapté de façon dynamique, c'est à dire en fonction de la dispersion des distances prédites :

$$\left| d_{k,i}^{rad} - \widehat{d_{k,J}^{rad}} \right| < K^{rad}. \sigma_{k,j}^{rad}$$

$\sigma_{k,j}^{rad}$ correspond à la déviation standard de l'incertitude des distances prédites $\left\{ \widehat{d_{k,J}^{rad}} \right\}_{j=1:N_{obs}}$ pour une trame k.

En variante, les étapes suivantes sont répétées pour toutes les associations distance/obstacle possibles entre l'ensemble de composantes multi-trajets et l'ensemble d'obstacles dans l'environnement du porteur mobile :

- calcul d'une position du porteur mobile 1 à partir des distances prédites et des distances mesurées, en utilisant ladite association ;
- à partir de cette position, calcul des distances théoriques entre le porteur mobile 1 et une pluralité d'ancres fixes et d'obstacles ;
- calcul de résidus définis comme la différence entre les distances théoriques et les distances mesurées ;
- calcul un d'un score de vraisemblance en fonction des résidus, qui peut être avantageusement l'inverse de la somme des résidus au carré ;
- détermination de l'association pour laquelle le score de vraisemblance est le plus élevé.

Avec cette variante, ce n'est plus la position prédite qui est utilisée, mais l'ensemble des mesures UWB et des mesures radar.

Il peut être noté que le sol est un des obstacles. Le procédé selon l'invention permet ainsi d'aux balises UWB de faire office d'altimètre avec une précision élevée, ce qui permet de se passer d'un radar altimètre ou d'un baromètre, permettant ainsi un gain de volume et de masse.

## Documents cités

[Barra] : J. Barra, T. Creuzet, S. Lesecq, G. Scorletti, E. Blanco, and M. Zarudniev, « Micro-drone ego-velocity and height estimation in gps-denied environments using an fmcw mimo radar » IEEE Sensors Journal, vol. 23, no. 3, pp. 2684-2692, 2023.

[Gentner] : C. Gentner and M. Schmidharnmer, « Ranging and multipathenhanced device-free localisation with densely-meshed ultrawideband deviees », IET Microwaves, Antennas & Propagation, vol. 17, no. 8, pp. 667--676, 2023. [Online]. Available: https://ietresearch.onlinelibrary. wiley.com/-doi/abs/1 0.1 049/mia2.12373

][Bocus] : M. J. Bocus and R. J. Piechocki, « Passive unsupervised localization and tracking using a multistatic uwb radar network », in 2021 IEEE Global Communications Conference (GLOBECOM), 2021, pp. 01-06.

[Ledergerber] : A. Ledergerber and R. D'Andrea, « A multi-static radar network with ultra-wideband radio-equipped deviees », Sensors (Basel, Switzerland), vol. 20, 2020. [Online]. Available: https://api.sernan ticscholar.org/CorpusiD:212750232

[Li] : C. Li, E. Tanghe, J. Fontaine, L. Martens, J. Romme, G. Singh, E. De Poorter, and W. Joseph, « Multistatic uwb radar-based passive human tracking using cots deviees », IEEE Antennas and Wireless Propagation Letters, vol. 21, no. 4, pp. 695--699, 2022.

[Santoro] : L. Santoro, M. Nardello, D. Fontanelli, and D. Brunelli, « Uwb bistatic radar sensor: Across channels evaluation », IEEE Sensors Letters, vol. 7, no. 10, pp. 1-4, 2023.

[Jiokeng] : K. Jiokeng, G. Jakllari, A. Tchana, and A.-L. Beylot, « When fun discovered music: Accurate wifi-based ranging in the presence of multipath », in IEEE INFOCOM 2020 - IEEE Conference on Computer Communications, 2020, pp. 1857-1866.

[Froehle] : M. Froehle, P. Meissner, and K. Witrisal, « Tracking of uwb multipath components using probability hypothesis density filters », in 2012 IEEE International Conference on Ultra-Wideband, 2012, pp. 306-310.

## Revendications

1. Procédé d'amélioration de la précision de la position d'un porteur mobile, comprenant des étapes de :

   S1) prédiction d'une position du porteur mobile (1), et détermination d'un ensemble de distances prédites ( $\left\{ \widehat{d_{k,J}^{rad}} \right\}_{j=1:N_{obs}}$ ) entre le porteur mobile (1) et un ensemble d'obstacles (2, 3, $O^j$) dans l'environnement du porteur mobile (1) ;
   S2) acquisition d'une réponse impulsionnelle de canal (CIR) entre un premier nœud (T1) et un deuxième nœud (T0), au moins un des deux nœuds (T1,T0) étant embarqué sur le porteur mobile (1) ;
   S3) détermination d'un ensemble de composantes multi-trajets ( $\left\{ d_{k,i}^{rad} \right\}_{i=1:N_{MPC}}$ ) à partir de la réponse impulsionnelle de canal (CIR) ;
   S4) association d'au moins une distance prédite ( $\left\{ \widehat{d_{k,J}^{rad}} \right\}_{j=1:N_{obs}}$ ) à au moins une composante multi-trajet ( $\left\{ d_{k,i}^{rad} \right\}_{i=1:N_{MPC}}$ ) correspondante de façon à obtenir un ensemble de distances mises à jour ( $\left\{ d_{k,i}^{rad} \right\}$ , $O^j$) entre le porteur mobile (1) et l'ensemble d'obstacles (2, 3, $O^j$).

2. Procédé selon la revendication 1, comprenant, après l'étape S4), une étape S5) de mise à jour de la position du porteur mobile en fonction de l'ensemble de distances mise à jour ( $\left\{ d_{k,i}^{rad} \right\}$ , $O^j$).

3. Procédé selon l'une des revendications précédentes, dans lequel la détermination d'un ensemble de composantes multi-trajets ( $\left\{ d_{k,i}^{rad} \right\}_{i=1:N_{MPC}}$ ) comprend les sous-étapes de :

   - détermination d'un premier temps de référence ( $\tau_{k,0}$ ) correspondant au trajet direct entre le premier nœud (T1) et le deuxième nœud (T0) ;
   - détermination de n temps additionnels ( $\tau_{k,i}$ ) correspondant aux différents trajets indirects entre le premier nœud et le deuxième nœud ;
   - calcul de n distances mesurées en fonction des n temps additionnels ( $\tau_{k,i}$ ), du premier temps de référence ( $\tau_{k,0}$ ) et de la distance entre le premier nœud et le deuxième nœud.

4. Procédé selon l'une des revendications précédentes, dans lequel l'association d'une distance prédite à une composante multi-trajet comprend, pour chaque obstacle de l'ensemble d'obstacles, la comparaison par rapport à un seuil de la différence entre la distance prédite et chacune des distances mesurées.

5. Procédé selon la revendication 4, dans lequel le seuil est déterminé de façon dynamique en fonction de la dispersion des distances prédites.

6. Procédé selon l'une des revendications 1 à 3, dans lequel l'association d'une distance prédite à une composante multi-trajet comprend, pour toutes les associations possibles entre l'ensemble de composantes multi-trajets et l'ensemble d'obstacles dans l'environnement du porteur mobile, les sous-étapes de :

  - calcul d'une position du porteur mobile (1) à partir des distances prédites et des distances mesurées, en utilisant ladite association ;
  - à partir de cette position, calcul des distances théoriques entre le porteur mobile 1 et une pluralité d'ancres fixes et d'obstacles ;
  - calcul de résidus définis comme la différence entre les distances théoriques et les distances mesurées ;
  - calcul un d'un score de vraisemblance en fonction des résidus ;
  - détermination de l'association pour laquelle le score de vraisemblance est le plus élevé.

7. Procédé selon l'une des revendications 3 à 6, dans lequel la détermination d'un premier temps de référence ($\tau_{k,0}$) comprend, dans une première fenêtre de recherche ([Tw1 Tw2]) :

  - une détermination d'un premier échantillon ($l_{supTh1}$) dont l'amplitude ($c_{supTh1}$) est supérieure à un premier seuil (Th1) ;
  - une détermination d'une amplitude maximale ( $c_{l_i^{max}}$ ) d'échantillon postérieur au premier échantillon ($l_{supTh1}$) ;
  - une détermination d'un deuxième seuil (Th2) qui est inférieur à l'amplitude maximale ( $c_{l_i^{max}}$ );
  - une détermination d'un deuxième échantillon ($l_{preTh2}$) dont l'amplitude précède immédiatement le deuxième seuil (Th2), et d'un troisième échantillon ($l_{postTh2}$) dont l'amplitude succède immédiatement au deuxième seuil (Th2) ;
  - le premier temps de référence ($\tau_{k,0}$) étant déterminé par une interpolation linéaire effectuée entre le deuxième échantillon ($l_{preTh2}$) et le troisième échantillon ($l_{postTh2}$).

8. Procédé selon la revendication 7, dans lequel le premier seuil (Th1) est un multiple du bruit ambiant mesuré dans la première fenêtre de recherche ([Tw1 Tw2]).

9. Procédé selon l'une des revendications 7 ou 8, dans lequel le deuxième seuil (Th2) est égal à la moitié de l'amplitude maximale ( $c_{l_i^{max}}$ ).

10. Procédé selon l'une des revendications 3 à 9, dans lequel la détermination de n temps additionnels ($\tau_{k,i}$)) comprend, pour chaque temps additionnel compris entre 1 et n :

  - une détermination de l'échantillon ($l_{i0}$) ayant l'amplitude maximale ($c_{li0}$) de la réponse impulsionnelle de canal (CIR) ;
  - une extraction du temps d'arrivée de la composante multi-trajets dans une fenêtre de recherche ([$l_{i0} \cdot dt_c - Tw1, l_{i0} \cdot dt_c + Tw2$]) centrée sur l'échantillon ($l_{i0}$) ayant l'amplitude maximale ($c_{li0}$) de la réponse impulsionnelle de canal (CIR) ;
  - un forçage à zéro de tous les échantillons dans une fenêtre d'élimination ([$l_{i0} \cdot dt_c - Tw3, l_{i0} \cdot dt_c + Tw4$]) centrée sur l'échantillon ($l_{i0}$) ayant l'amplitude maximale de la réponse impulsionnelle de canal (CIR).

11. Procédé selon l'une des revendications précédentes, dans lequel la prédiction d'une position du porteur mobile (1) est implémentée par un filtre de Kalman étendu.

12. Procédé selon l'une des revendications 1 à 10, dans la prédiction d'une position du porteur mobile (1) est implémentée par un filtrage particulaire.

13. Procédé selon l'une des revendications précédentes, dans lequel les distances prédites sont obtenues par télémétrie bidirectionnelle entre une pluralité d'ancres UWB de positions connues et un récepteur UWB embarqué sur le porteur mobile (1).

14. Procédé selon la revendication 13, dans lequel le deuxième nœud (T0) est embarqué sur le porteur mobile (1), le deuxième nœud (T0) étant le récepteur UWB.

15. Procédé selon l'une des revendications précédentes, dans lequel, dans l'étape S1), la position d'au moins une partie des obstacles, parmi l'ensemble d'obstacles (2, 3, $O^j$), est connue.

16. Système d'amélioration de la précision de la position d'un porteur mobile, le système étant configuré pour :

  S1) prédire une position du porteur mobile, et détermination d'un ensemble de distances prédites entre le porteur mobile et un ensemble d'obstacles dans l'environnement du porteur mobile, les distances prédites étant obtenues par télémétrie bidirectionnelle entre une pluralité d'ancres UWB de positions connues et un récepteur UWB embarqué sur le porteur mobile (1) ;

S2) acquérir une réponse impulsionnelle de canal (CIR) entre un premier nœud et un deuxième nœud, au moins le deuxième nœud (T0) étant embarqué sur le porteur mobile et étant le récepteur UWB ;

S3) déterminer un ensemble de composantes multi-trajets à partir de la réponse impulsionnelle de canal (CIR) ;

S4) associer une distance prédite à une composante multi-trajet correspondante de façon à obtenir un ensemble de distances mises à jour comprenant au moins une distance mise à jour ;

**17.** Système selon la revendication 16, dans lequel les deux nœuds sont embarqués sur le porteur mobile, le premier nœud (T1) étant un tag Ultra Large Bande, le deuxième nœud (T0) étant un récepteur Ultra Large Bande.

**18.** Système selon l'une des revendications 16 ou 17, dans lequel le porteur mobile (1) est un drone.

[Fig. 1]

[Fig. 2]

[Fig. 3]

FIG. 3

[Fig. 4]

FIG. 4

[Fig. 5]

FIG. 5

[Fig. 6]

FIG. 6

[Fig. 7]

FIG. 7

[Fig. 8]

FIG. 8

Europäisches
Patentamt

European
Patent Office

Office européen
des brevets

# RAPPORT DE RECHERCHE EUROPEENNE

**Numéro de la demande**

**EP 25 20 2195**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | KAUFFMAN K ET AL: "Simulation Study of UWB-OFDM SAR for Navigation Using an Extended Kalman Filter", GNSS 2010 - PROCEEDINGS OF THE 23RD INTERNATIONAL TECHNICAL MEETING OF THE SATELLITE DIVISION OF THE INSTITUTE OF NAVIGATION (ION GNSS 2010), THE INSTITUTE OF NAVIGATION, 8551 RIXLEW LANE SUITE 360 MANASSAS, VA 20109, USA, 24 septembre 2010 (2010-09-24), pages 2443-2451, XP056000347, * Abstract * * Equations 5, 18 * * Section D, E, F, H * ----- | 1-18 | INV. G01S5/02 G01S13/76 |
| A | ZHANG PEIZE ET AL: "Radio propagation measurement and cluster-based analysis for millimeter-wave cellular systems in dense urban environments", FRONTIERS OF INFORMATION TECHNOLOGY & ELECTRONIC ENGINEERING, ZHEJIANG UNIVERSITY PRESS, HEIDELBERG, vol. 22, no. 4, 1 avril 2021 (2021-04-01), pages 471-487, XP037441765, ISSN: 2095-9184, DOI: 10.1631/FITEE.2000489 [extrait le 2021-05-02] * Section 3.1 * ----- -/-- | 5,7,8 | DOMAINES TECHNIQUES RECHERCHES (IPC) G01S |

Le présent rapport a été établi pour toutes les revendications

| Lieu de la recherche | Date d'achèvement de la recherche | Examinateur |
|---|---|---|
| Munich | 29 janvier 2026 | Bomart, Sébastien |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
.................................................................
& : membre de la même famille, document correspondant

EPO FORM 1503 03.82 (P04C02)

page 1 de 2

| Europäisches Patentamt European Patent Office Office européen des brevets | **RAPPORT DE RECHERCHE EUROPEENNE** | Numéro de la demande |
|---|---|---|
| | | EP 25 20 2195 |

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | Meissner Paul: "Multipath-Assisted Indoor Positioning", , 1 octobre 2014 (2014-10-01), pages 1-175, XP093259808, Extrait de l'Internet: URL:https://www2.spsc.tugraz.at/www-archive/downloads/MeissnerPhDThesis2014web.pdf * page 95 * * page 106 * * page 95 - page 99 * ----- | 6-8,12 | |
| A | ADITYA SUNDAR ET AL: "A Survey on the Impact of Multipath on Wideband Time-of-Arrival Based Localization", PROCEEDINGS OF THE IEEE, IEEE. NEW YORK, US, vol. 106, no. 7, 1 juillet 2018 (2018-07-01), pages 1183-1203, XP011687700, ISSN: 0018-9219, DOI: 10.1109/JPROC.2018.2819638 [extrait le 2018-07-26] * Section IV * * Section VII * ----- | 12-15 | |
| A | US 2018/059231 A1 (DEWBERRY BRANDON [US] ET AL) 1 mars 2018 (2018-03-01) * figures 2, 3 * * alinéa [0008] * ----- | 13,14 | **DOMAINES TECHNIQUES RECHERCHES (IPC)** |

Le présent rapport a été établi pour toutes les revendications

| Lieu de la recherche | Date d'achèvement de la recherche | Examinateur |
|---|---|---|
| Munich | 29 janvier 2026 | Bomart, Sébastien |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
..............................................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 25 20 2195

La présente annexe indique les membres de la famille de brevets relatifs aux documents  brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

29-01-2026

| Document brevet cité au rapport de recherche | Date de publication | Membre(s) de la famille de brevet(s) | Date de publication |
|---|---|---|---|
| US 2018059231    A1 | 01-03-2018 | US    2018059231 A1<br>WO    2018031971 A1 | 01-03-2018<br>15-02-2018 |

EPO FORM P0460

Pour tout renseignement concernant cette annexe : voir Journal Officiel de l'Office européen des brevets, No.12/82

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **J. BARRA** ; **T. CREUZET** ; **S. LESECQ** ; **G. SCORLETTI** ; **E. BLANCO** ; **M. ZARUDNIEV**. Micro-drone ego-velocity and height estimation in gps-denied environments using an fmcw mimo radar. *IEEE Sensors Journal*, 2023, vol. 23 (3), 2684-2692
- **C. GENTNER** ; **M. SCHMIDHARNMER**. Ranging and multipathenhanced device-free localisation with densely-meshed ultrawideband deviees. *IET Microwaves, Antennas & Propagation*, 2023, vol. 17 (8), 667-676, https://ietresearch.onlinelibrary. wiley. com/doi/abs/1 0.1 049/mia2.12373
- **M. J. BOCUS** ; **R. J. PIECHOCKI**. Passive unsupervised localization and tracking using a multi-static uwb radar network. *2021 IEEE Global Communications Conference (GLOBECOM)*, 2021, 01-06
- **A. LEDERGERBER** ; **R. D'ANDREA**. A multi-static radar network with ultra-wideband radio-equipped deviees. *Sensors (Basel, Switzerland)*, 2020, vol. 20, https://api.sernanticscholar.org/CorpusiD:212750232

- **C. LI** ; **E. TANGHE** ; **J. FONTAINE** ; **L. MARTENS** ; **J. ROMME** ; **G. SINGH** ; **E. DE POORTER** ; **W. JOSEPH**. Multistatic uwb radar-based passive human tracking using cots deviees. *IEEE Antennas and Wireless Propagation Letters*, 2022, vol. 21 (4), 695-699
- **L. SANTORO** ; **M. NARDELLO** ; **D. FONTANELLI** ; **D. BRUNELLI**. Uwb bistatic radar sensor: Across channels evaluation. *IEEE Sensors Letters*, 2023, vol. 7 (10), 1-4
- **K. JIOKENG** ; **G. JAKLLARI** ; **A. TCHANA** ; **A.-L. BEYLOT**. When fun discovered music: Accurate wifi-based ranging in the presence of multipath. *IEEE INFOCOM 2020 - IEEE Conference on Computer Communications*, 2020, 1857-1866
- **M. FROEHLE** ; **P. MEISSNER** ; **K. WITRISAL**. Tracking of uwb multipath components using probability hypothesis density filters. *2012 IEEE International Conference on Ultra-Wideband*, 2012, 306-310